# EUROPEAN PATENT APPLICATION

(11) **EP 4 246 141 A1**
(43) Date of publication of application: **20.09.2023**
(21) Application number: 23161399.3
(22) Date of filing: 13.03.2023
(51) Int. Cl.: G01N 30/02, H04L 67/12, H04L 67/56, G01N 35/00

(54) **GAS CHROMATOGRAPH, MANAGEMENT APPARATUS, MANAGEMENT SYSTEM, AND MANAGEMENT METHOD**

(30) Priority: 15.03.2022 JP 2022040686
(71) Applicant: Yokogawa Electric Corporation, Tokyo 180-8750 (JP)
(72) Inventor: AKIYAMA, Masanori, Tokyo 180-8750 (JP); OSHITA, Tetsuo, Tokyo 180-8750 (JP)
(74) Representative: Stöckeler, Ferdinand

(57) **Abstract**

A gas chromatograph (10) as a first gas chromatograph includes a controller (12) that processes data and a communication interface (14) that outputs the data to a management apparatus (30). The communication interface (14) functions as a wireless communication access point of a network identified by a predetermined identifier and outputs the data and/or information about the first gas chromatograph (10) via the network to the management apparatus (30) connected to the wireless communication access point, and connects a second gas chromatograph (20) to the wireless communication access point in bridge mode as a child device to cause the second gas chromatograph (20) to output data processed by the second gas chromatograph (20) and/or information about the second gas chromatograph (20) to the management apparatus (30) via the wireless communication access point and the network.

## Description

### TECHNICAL FIELD

The present disclosure relates to a gas chromatograph, a management apparatus, a management system, and a management method.

### BACKGROUND

Technology for easily acquiring the values of parameters necessary for non-experts to understand the state of an analysis apparatus is known. For example, see Patent Literature (PTL) 1.

### CITATION LIST

### Patent Literature

PTL 1: JP 2021-101164 A

### SUMMARY

Demand exists for improved convenience in the management of a plurality of gas chromatographs.

It would be helpful to provide a gas chromatograph, a management apparatus, a management system, and a management method that can improve the convenience of management of a plurality of gas chromatographs.

A gas chromatograph as a first gas chromatograph according to an embodiment includes a controller configured to process data and a communication interface configured to output the data to a management apparatus. The communication interface functions as a wireless communication access point of a network identified by a predetermined identifier and outputs the data and/or information about the gas chromatograph via the network to the management apparatus connected to the wireless communication access point. The communication interface connects a second gas chromatograph to the wireless communication access point in bridge mode as a child device to cause the second gas chromatograph to output data processed by the second gas chromatograph and/or information about the second gas chromatograph to the management apparatus via the wireless communication access point and the network. In this way, the management apparatus can communicate with a plurality of gas chromatographs in parallel without switching network connections. The convenience for the management of a plurality of gas chromatographs thereby improves.

In a gas chromatograph according to an embodiment, the communication interface may acquire information to be set on the gas chromatograph and/or information on maintenance of the gas chromatograph from the management apparatus via the network. In this way, the management apparatus can maintain a gas chromatograph and acquire data in parallel without switching network connections. The convenience for the management of a plurality of gas chromatographs thereby improves.

In a gas chromatograph according to an embodiment, the communication interface may cause the second gas chromatograph to acquire, from the management apparatus, information to be set on the second gas chromatograph and/or information on maintenance of the second gas chromatograph via the wireless communication access point and the network. In this way, the management apparatus can maintain a gas chromatograph and acquire data in parallel without switching network connections. The convenience for the management of a plurality of gas chromatographs thereby improves.

A management apparatus according to an embodiment includes a communication interface and a controller. The communication interface communicates with the aforementioned first gas chromatograph as a parent device and the aforementioned second gas chromatograph as a child device via the aforementioned network. The controller acquires data received by the communication interface from the first gas chromatograph and the second gas chromatograph. In this way, the management apparatus can communicate with a plurality of gas chromatographs in parallel without switching network connections. The convenience for the management of a plurality of gas chromatographs thereby improves.

In a management apparatus according to an embodiment, the controller may generate information to be set on the first gas chromatograph or the second gas chromatograph or information on maintenance of the first gas chromatograph or the second gas chromatograph and output the generated information using the communication interface via the network to the first gas chromatograph or the second gas chromatograph. In this way, the management apparatus can maintain a gas chromatograph and acquire data in parallel without switching network connections. The convenience for the management of a plurality of gas chromatographs thereby improves.

A management system according to an embodiment includes the aforementioned gas chromatograph and the aforementioned management apparatus. In this way, the management system can communicate with a plurality of gas chromatographs in parallel without switching network connections. The convenience for the management of a plurality of gas chromatographs thereby improves.

A management method according to an embodiment includes communicating via a network identified by a predetermined identifier with a first gas chromatograph as a parent device that functions as a wireless communication access point of the network and a second gas chromatograph as a child device that connects to the wireless communication access point in bridge mode. The management method includes acquiring data received from the first gas chromatograph and the second gas chromatograph by the communicating step. In this way, the management apparatus can communicate with a plurality of gas chromatographs in parallel without switching network connections. The convenience for the management of a plurality of gas chromatographs thereby improves.

According to the gas chromatograph, the management apparatus, the management system, and the management method of the present disclosure, the convenience of management of a plurality of gas chromatographs is improved.

### BRIEF DESCRIPTION OF THE DRAWINGS

In the accompanying drawings:
FIG. 1 is a block diagram illustrating an example configuration of a management system according to a comparative example;
FIG. 2 is a block diagram illustrating an example configuration of a management system according to an embodiment;
FIG. 3 is a block diagram illustrating an example configuration in which a management apparatus is connectable to a plurality of networks;
FIG. 4 illustrates an example of a management screen of a gas chromatograph;
FIG. 5 is a diagram illustrating an example of measurement data of a gas chromatograph;
FIG. 6 is a table illustrating an example of analysis results based on measurement data;
FIG. 7 is a table illustrating an example of the alarm history of a gas chromatograph;
FIG. 8 is a diagram illustrating an example of a menu screen of a management apparatus; and
FIG. 9 is a flowchart illustrating example procedures of a management method according to an embodiment.

### DETAILED DESCRIPTION

### (Comparative Example)

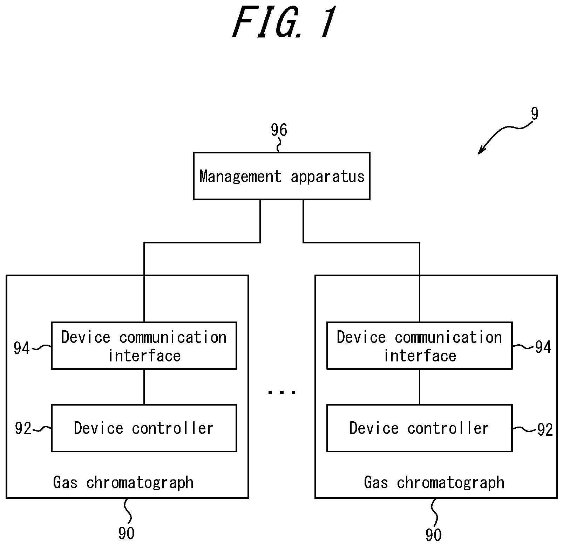

As illustrated in FIG. 1, a management system 9 according to a comparative example includes a management apparatus 96 and a gas chromatograph 90. The gas chromatograph 90 includes a device controller 92 and a device communication interface 94. The gas chromatograph 90 is assumed to be a measurement apparatus that measures various parameters representing plant conditions. The device controller 92 processes signals acquired from the measurement target to generate measurement data. The device communication interface 94 outputs the measurement data to the management apparatus 96. The management apparatus 96 acquires measurement data from the gas chromatograph 90. The management apparatus 96 also acquires information such as the occurrence of alarms from the gas chromatograph 90. The management apparatus 96 also transmits information on parameters to be set on the gas chromatograph 90 and firmware update data for the gas chromatograph 90.

In a case in which the management system 9 includes a plurality of gas chromatographs 90, the management apparatus 96 communicates with each gas chromatograph 90. The gas chromatographs 90 are installed in various parts of a plant. In the management system 9 according to the comparative example, the management apparatus 96 communicates with each gas chromatograph 90 wirelessly. It is assumed to be difficult for the gas chromatographs 90 to be wired to each other. In the case in which the management apparatus 96 communicates wirelessly with each gas chromatograph 90, the management apparatus 96 connects to and initiates communication with one gas chromatograph 90 using an identifier that identifies the device communication interface 94 of the gas chromatograph 90 and a security key and then acquires measurement data and the like from the gas chromatograph 90 and outputs information such as parameters to the gas chromatograph 90.

The device communication interface 94 of each gas chromatograph 90 is identified by a different identifier and requires a different security key to connect. To switch to communication with another gas chromatograph 90, the management apparatus 96 must reconnect to that gas chromatograph 90. Therefore, while communicating with one gas chromatograph 90, the management apparatus 96 cannot communicate with other gas chromatographs 90.

In a case in which the size of the measurement data to be acquired from one gas chromatograph 90 is large, the time required to acquire the measurement data becomes longer. Furthermore, in a case of setting parameters or updating firmware on one gas chromatograph 90, the time required to output the setting data or updated data becomes longer. In these cases, the time during which the management apparatus 96 cannot communicate with other gas chromatographs 90 becomes longer. Since communication is only possible with one gas chromatograph 90 at a time in the management system 9 according to the comparative example, the convenience is reduced in the case of managing a plurality of gas chromatographs 90.

The present disclosure therefore describes a gas chromatograph, a management apparatus, a management system, and a management method that can improve the convenience of management of a plurality of gas chromatographs.

### (Embodiments)

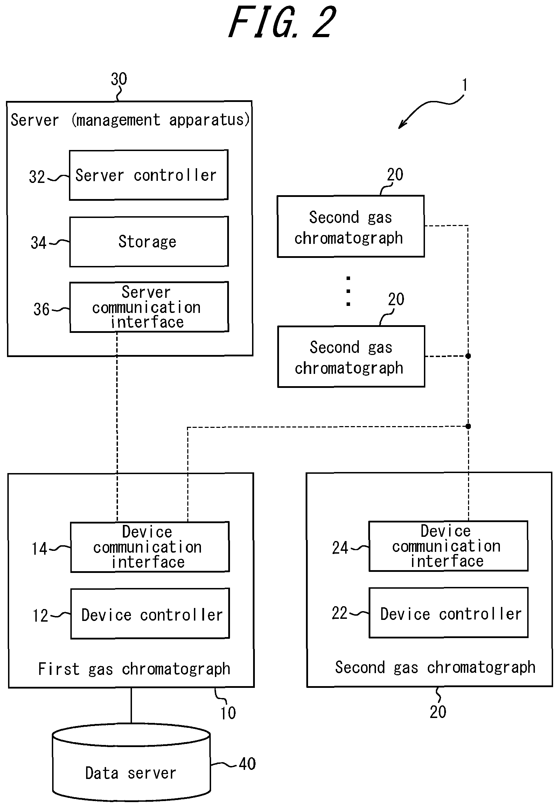

As illustrated in FIG. 2, a management system 1 according to an embodiment of the present disclosure includes a first gas chromatograph 10, a second gas chromatograph 20, a server 30, and a data server 40. The first gas chromatograph 10 and the second gas chromatograph 20 are also collectively referred to simply as gas chromatographs when no distinction is necessary. The server 30 is also referred to as a management apparatus. The first gas chromatograph 10, the second gas chromatograph 20, and the server 30 are configured to communicate wirelessly, as described below. The dashed lines connecting the first gas chromatograph 10, the second gas chromatograph 20, and the server 30 represent connection in a manner enabling wireless communication. Specifically, the server 30 and the first gas chromatograph 10 are connected by a dashed line, and the first gas chromatograph 10 and the (plurality of) second gas chromatograph(s) 20 are connected by dashed lines. The first gas chromatograph 10 and the data server 40 are configured to communicate in a wired manner, as described below. The solid line connecting the first gas chromatograph 10 and the data server 40 represents connection in a manner enabling wired communication.

The server 30 outputs, to the gas chromatograph, information on parameters to be set on the gas chromatograph or information on maintenance, including updated data for programs such as firmware required for operation of the gas chromatograph. The server 30 outputs, to the gas chromatograph, information requesting that measurement data or information about the gas chromatograph be outputted. In response to a request from the server 30, the gas chromatograph outputs measurement data or information about the gas chromatograph to the server 30. The server 30 acquires the measurement data or information about the gas chromatograph from the gas chromatograph. The information about the gas chromatograph includes alarms occurring on the gas chromatograph, the operating status of the gas chromatograph, and the like.

The server 30 stores the information acquired from the gas chromatograph on the data server 40. The server 30 manages the gas chromatograph based on the information about the gas chromatograph stored on the data server 40, as described below. The measurement data is used to manage the plant. The plant may be managed by the server 30 or by another apparatus.

Specific examples of each component of the management system 1 are described below.

### <Gas Chromatograph>

The first gas chromatograph 10 includes a device controller 12 and a device communication interface 14. The second gas chromatograph 20 includes a device controller 22 and a device communication interface 24. The device controllers 12 and 22 are configured to include a processor such as a central processing unit (CPU). The device communication interfaces 14 and 24 are configured to include a wireless local area network (LAN) communication module.

The first gas chromatograph 10 and the second gas chromatograph 20 are connected within the same network on the wireless LAN. The same network means a network identified by a single identifier. For example, a Service Set IDentifier (SSID) is used as an identifier to identify a network in a wireless LAN connection. The first gas chromatograph 10 and the second gas chromatograph 20 may be connected within the same network identified by a predetermined identifier.

The first gas chromatograph 10 and the second gas chromatograph 20 are distinguished by different functions of their respective communication interfaces. The device communication interface 14 of the first gas chromatograph 10 connects to the wireless LAN network in access point mode. In other words, the device communication interface 14 of the first gas chromatograph 10 functions as a wireless communication access point. The device communication interface 24 of the second gas chromatograph 20 connects to the wireless LAN network in bridge mode. The first gas chromatograph 10 is also referred to as the parent device, which functions as a wireless communication access point of the wireless LAN. The second gas chromatograph 20 is also referred to as a child device, which connects in bridge mode to the wireless communication access point of the wireless LAN.

The number of first gas chromatographs 10 functioning as parent devices in the same network is limited to one. The number of second gas chromatographs 20 functioning as child devices is not limited to one, but rather may be two or more. The upper limit on the number of child devices is determined by the specifications of the communication module of the parent device. It is assumed that each gas chromatograph connected to the same network is identified by an Internet Protocol (IP) address during communication. Each gas chromatograph may be identified by other means.

### <Server 30 (Management Apparatus)>

The server 30 includes a server controller 32, a storage 34, and a server communication interface 36.

The server controller 32 may be configured by a processor such as a central processing unit (CPU). The server controller 32 may implement the various functions of the management system 1 by executing a predetermined program.

The storage 34 may store various information used for operations of the server 30, programs for implementing the functions of the server 30, and the like. The storage 34 may function as a working memory of the server 30. The storage 34 may be configured to include an electromagnetic storage medium such as a magnetic disk or to include a memory such as a semiconductor memory or a magnetic memory. The storage 34 may be configured separately from the server 30.

The server communication interface 36 is configured to include a wireless LAN communication module. The server communication interface 36 connects to the device communication interface 14 of the first gas chromatograph 10 functioning as a wireless communication access point. In other words, the server communication interface 36 connects to the network identified by a predetermined identifier. By connecting to the network identified by the predetermined identifier, the server communication interface 36 can communicate with gas chromatographs connected to the same network. Therefore, the server communication interface 36 can communicate not only with the device communication interface 14 of the first gas chromatograph 10, but also with the device communication interface 24 of the second gas chromatograph 20 that is bridged. The server communication interface 36 communicates with each gas chromatograph connected to the same network by identifying each gas chromatograph using an IP address.

The server 30 may include a display device for notifying managers or workers at a plant or other site of information. The display device may, for example, include a liquid crystal display (LCD). The display device may, for example, include an organic electroluminescence (EL) display or an inorganic EL display. The display device may include a plasma display, i.e., a plasma display panel (PDP). The display device is not limited to these displays and may include various other types of displays. The display device may include a light emitting device such as a light emitting diode (LED). The server 30 may also include an audio output device such as a speaker. The management system 1 may include an output device such as a display device or an audio output device.

The server 30 may include an input device that accepts input, such as data, from managers, workers, or others at a plant or other site. The input device may, for example, include a keyboard or physical keys, a touch panel or touch sensor, or a pointing device such as a mouse. The input device is not limited to these examples and may include a variety of other devices. The management system 1 may include an input device.

### <Data Server 40>

The data server 40 is connected to the device communication interface 14 of the first gas chromatograph 10 by a wired LAN. The data server 40 communicates with the server communication interface 36 of the server 30 via the device communication interface 14 of the first gas chromatograph 10. The data server 40 stores information acquired from the server 30. The data server 40 also outputs the stored information to the server 30. The data server 40 stores the measurement data of the gas chromatograph or information about the gas chromatograph based on instructions from the server 30.

The data server 40 may be configured to include an electromagnetic storage medium such as a magnetic disk or to include a memory such as a semiconductor memory or a magnetic memory. The data server 40 may be configured to be identical or similar to the server 30. The functions of the data server 40 may be included as part of the functions of the server 30. In other words, the server 30 and the data server 40 may be implemented as a single apparatus.

### <Connection of Other Devices>

Not only the data server 40 but also other devices may be connected to the network configured by the device communication interface 14 of the first gas chromatograph 10.

### <Other Configuration Examples of Management System 1>

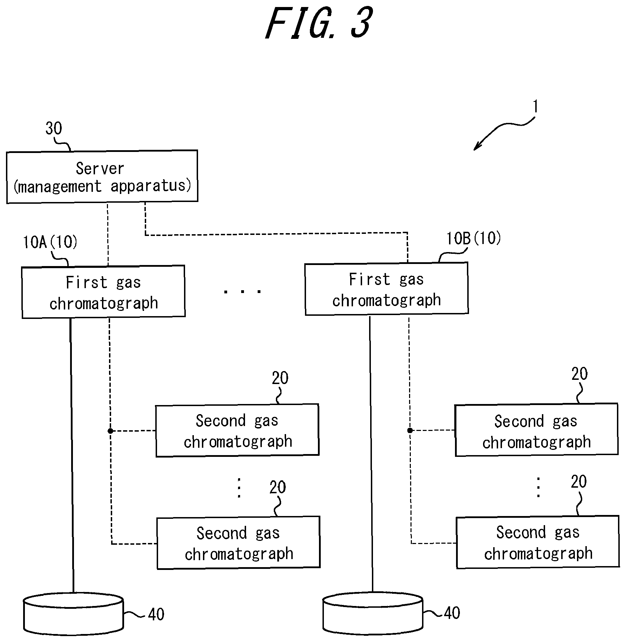

The server 30 may be configured to connect to two or more networks. As illustrated in FIG. 3, the first gas chromatograph 10 may include first gas chromatographs 10A and 10B. The first gas chromatographs 10A and 10B function as wireless communication access points of networks identified by different identifiers. The first gas chromatograph 10A establishes a first network identified by a first identifier. The first gas chromatograph 10B establishes a second network identified by a second identifier.

When connected to the first gas chromatograph 10A, the server 30 can communicate with the first gas chromatograph 10A and with the second gas chromatograph 20 that is bridged to the wireless access point of the first gas chromatograph 10A. However, when connected to the first gas chromatograph 10A, the server 30 cannot communicate with the first gas chromatograph 10B nor with the second gas chromatograph 20 that is bridged to the first gas chromatograph 10B. By severing the connection with the first gas chromatograph 10A and connecting anew to the first gas chromatograph 10B, the server 30 can communicate with the first gas chromatograph 10B and with the second gas chromatograph 20 that is bridged to the wireless access point of the first gas chromatograph 10B.

When connected to the first gas chromatograph 10A, the server 30 stores information or data acquired from the first gas chromatograph 10A on the data server 40 connected to the first gas chromatograph 10A. When connected to the first gas chromatograph 10B, the server 30 stores information or data acquired from the first gas chromatograph 10B on the data server 40 connected to the first gas chromatograph 10B.

### (Operation Example of Management System 1)

An example of operations of the management system 1 according to the present embodiment is described below.

The device controllers 12 and 22 of the gas chromatographs process data on the plant and the like, and as described below, output the processed data to the server 30 by communicating with the server 30 using the device communication interfaces 14 and 24.

The server controller 32 of the server 30 connects to the device communication interface 14 of the first gas chromatograph 10 using the server communication interface 36. The server controller 32 acquires, in advance, a security key required to connect to the network identified by the predetermined identifier. By connecting the server communication interface 36 to the device communication interface 14 using the security key, the server controller 32 can connect to the network identified by the predetermined identifier.

The server controller 32 uses the server communication interface 36 to acquire measurement data of the first gas chromatograph 10 or information about the first gas chromatograph 10 via the device communication interface 14 of the first gas chromatograph 10. In other words, the server communication interface 36 connects to the device communication interface 14, which functions as a wireless communication access point of the network identified by the predetermined identifier, and acquires (receives) the measurement data of the first gas chromatograph 10 or information about the first gas chromatograph 10 via the network. Conversely, the device communication interface 14 of the first gas chromatograph 10 outputs (transmits) the measurement data of the first gas chromatograph 10 or information about the first gas chromatograph 10 via the network to the server 30 that connects to the device communication interface 14 functioning as a wireless communication access point.

The server controller 32 uses the server communication interface 36 to output (transmit) information on parameters to be set on the first gas chromatograph 10, or information on maintenance, such as an update, for the first gas chromatograph 10 via the device communication interface 14 of the first gas chromatograph 10. Conversely, the device communication interface 14 of the first gas chromatograph 10 acquires (receives) information on parameters or the like to be set for the first gas chromatograph 10, or information on maintenance for the first gas chromatograph 10, from the server 30 that connects to the device communication interface 14 functioning as a wireless communication access point. The device controller 12 of the first gas chromatograph 10 sets the acquired parameters or performs maintenance, such as updating the programs on the first gas chromatograph 10, based on the maintenance information.

In a case in which the device communication interface 24 of the second gas chromatograph 20 is bridged to the device communication interface 14 of the first gas chromatograph 10, the device communication interface 24 of the second gas chromatograph 20 is connected to the network identified by the predetermined identifier. The server communication interface 36 can communicate with the device communication interface 24 of the second gas chromatograph 20 within the same network via the device communication interface 14 of the first gas chromatograph 10. With this configuration, the server communication interface 36 can communicate with both the first gas chromatograph 10 and the second gas chromatograph 20 without having to reconnect to the network.

The device communication interface 14 of the first gas chromatograph 10 may cause the second gas chromatograph 20 to connect in bridge mode as a child device to the device communication interface 14 functioning as a wireless communication access point. The device communication interface 14 may cause data processed by the second gas chromatograph 20 or information about the second gas chromatograph 20 to be outputted to the server 30 via the network. The device communication interface 14 of the first gas chromatograph 10 may cause the second gas chromatograph 20, which is a child device, to acquire information on parameters to be set on the second gas chromatograph 20 and/or information on maintenance from the server 30 via the network.

The server communication interface 36 may communicate via the network identified by the predetermined identifier with the first gas chromatograph 10 as a parent device that functions as a wireless communication access point of the network and the second gas chromatograph 20 as a child device that connects to the wireless communication access point in bridge mode. The server controller 32 may acquire data or information from the first gas chromatograph 10 as the parent device and the second gas chromatograph 20 as the child device.

The server controller 32 may generate information on parameters or the like to be set on the first gas chromatograph 10 as the parent device or the second gas chromatograph 20 as the child device. The server controller 32 may generate information on maintenance, such as an update, for the first gas chromatograph 10 as the parent device or the second gas chromatograph 20 as the child device. The server controller 32 may output the generated information, using the server communication interface 36, to the first gas chromatograph 10 as the parent device or the second gas chromatograph 20 as the child device via the network in which the device communication interface 14 of the first gas chromatograph 10 functions as a wireless communication access point.

The device communication interface 14 may connect the second gas chromatograph 20 in bridge mode as a child device to the wireless communication access point and perform setting processing to cause the second gas chromatograph 20 to output data processed by the second gas chromatograph 20 and/or information about the second gas chromatograph 20 to the server 30 via the wireless access point and the network.

Using the server communication interface 36, the server controller 32 instructs the gas chromatograph to output measurement data or information about the gas chromatograph. The server controller 32 identifies the target gas chromatograph, from which the information is to be acquired, by IP address and outputs the instruction. In response to the instruction from the server controller 32, the gas chromatograph outputs measurement data or information about the gas chromatograph to the server 30. The gas chromatograph associates the outputted information with the device identification information that identifies the gas chromatograph itself. The server controller 32 can identify which gas chromatograph outputted the information by the device identification information associated with the acquired information. The server controller 32 may identify which gas chromatograph outputted the information by recognizing the IP address of the transmission source when acquiring the information from the gas chromatograph.

The server controller 32 stores the measurement data or the information about the gas chromatograph acquired from each gas chromatograph on the data server 40. The server controller 32 uses the server communication interface 36 to output the information or the data to be stored on the data server 40 to the data server 40 via the device communication interface 14 of the first gas chromatograph 10. The data server 40 stores the information or data acquired from the server controller 32.

The server controller 32 uses the server communication interface 36 to output information such as parameters to be set on the gas chromatograph or information on maintenance, such as an update. The server controller 32 uses the IP address to identify the gas chromatograph targeted for setting parameters or updating programs and outputs the information on parameters and the like or the information on maintenance, such as an update. The gas chromatograph sets the acquired parameters on the gas chromatograph itself or updates the programs of the gas chromatograph itself using the acquired update.

The server communication interface 36 may be configured to simultaneously acquire (receive) data from a plurality of gas chromatographs and simultaneously output (transmit) information to a plurality of gas chromatographs by communicating with each gas chromatograph in parallel. The server communication interface 36 may be configured to acquire (receive) data from a plurality of gas chromatographs by time division and output (transmit) information to a plurality of gas chromatographs by time division by communicating with each gas chromatograph sequentially. During either simultaneous communication or time division, the server communication interface 36 can maintain communication with a plurality of gas chromatographs without switching the network connection.

### <Management Screen 50>

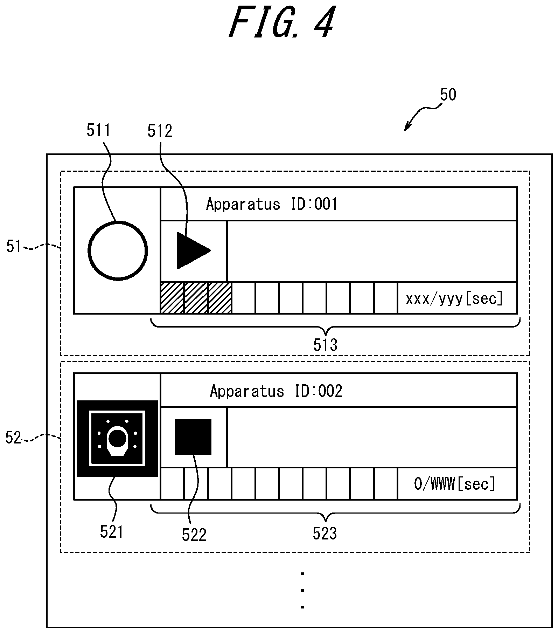

The server controller 32 may, as illustrated in FIG. 4, display the status of each gas chromatograph as a management screen 50 on the aforementioned display device of the server 30 to enable a user to grasp the status of each gas chromatograph. The management screen 50 includes display frames 51 and 52 that display the status of each gas chromatograph. Gas chromatographs are assumed to be identified by an apparatus ID. The display frame 51 displays the status of the gas chromatograph with an apparatus ID of 001. The display frame 52 displays the status of the gas chromatograph with an apparatus ID of 002.

The management screen 50 includes apparatus status display frames 511 and 521, which indicate whether each gas chromatograph is normal or abnormal, within the display frames 51 and 52. The apparatus status display frame 511 displays an image indicating that the gas chromatograph with apparatus ID 001 is normal. The apparatus status display frame 521 displays an image indicating that the gas chromatograph with apparatus ID 002 is abnormal.

The management screen 50 includes operating status display frames 512 and 522, indicating whether each gas chromatograph is in operation or is stopped, within the display frames 51 and 52. The operating status display frame 512 displays a symbol indicating that the gas chromatograph with apparatus ID 001 is in operation. The operating status display frame 522 displays a symbol indicating that the gas chromatograph with apparatus ID 002 is stopped.

The management screen 50 includes progress display frames 513 and 523, illustrating the progress of the work being performed when each gas chromatograph is in operation, within the display frames 51 and 52. Gas chromatographs take a predetermined amount of time for each measurement. The display "xxx/yyy [sec]" in the progress display frame 513 indicates that the time required for the gas chromatograph with apparatus ID 001 to perform one measurement is yyy sec, and that the measurement has progressed to xxx sec. In addition, the hatched display of 3 out of the 10 rectangles in the progress display frame 513 indicates that the measurement progress rate is approximately 30%. The display of "0/www [sec]" in the progress display frame 523 represents that gas chromatograph with apparatus ID 002 is stopped. Furthermore, none of the rectangles in the progress display frame 523 is hatched.

### <Measurement Data>

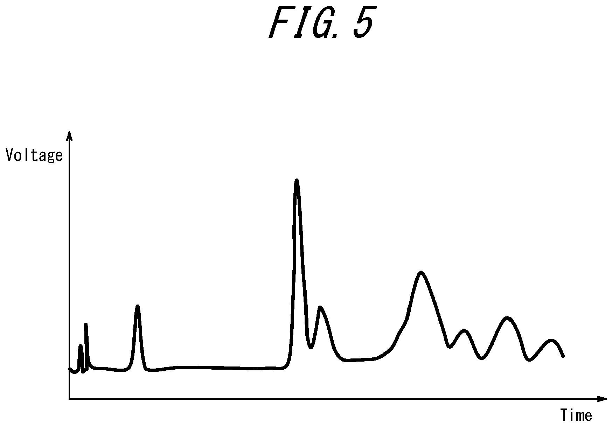

Gas chromatographs output chromatographic data representing the results of analysis of the concentration of various gases as measurement data. Gas chromatographs vaporize a gas to be analyzed and then differentiate and detect types of gases according to the time taken to reach the detector. The chromatographic data relates the time taken for a gas to reach the detector and the signal intensity (voltage signal) detected at each time. The chromatographic data is represented by a graph with time on the horizontal axis and voltage on the vertical axis, as illustrated in FIG. 5. The server controller 32 may display the measurement data acquired from each gas chromatograph as a graph on the management screen 50.

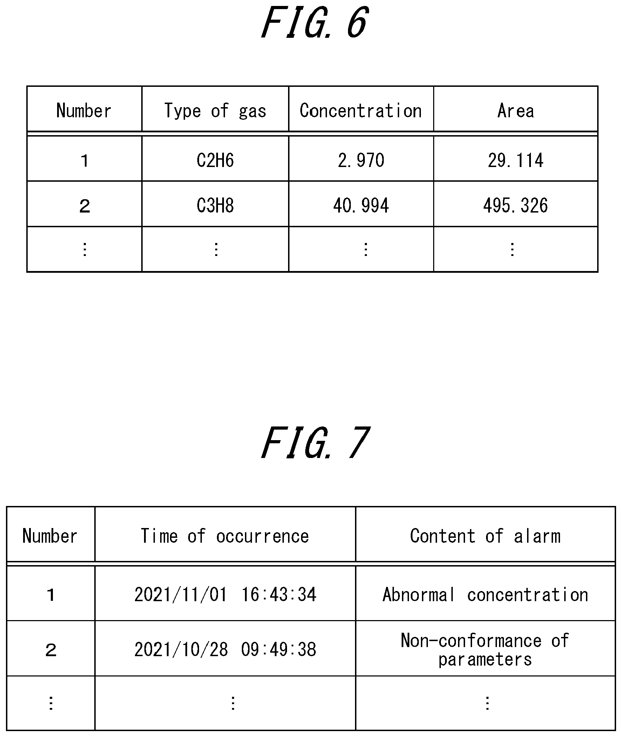

In a case of acquiring the chromatographic data, the server controller 32 may analyze the types of gas contained in the gas to be analyzed and the concentrations. As illustrated in FIG. 6, the server controller 32 may identify, based on the chromatographic data, that the gas to be analyzed contains C₂H₆ (ethane) and C₃H₈ (propane). The server controller 32 may also calculate the area in the graph corresponding to each of C₂H₆ (ethane) and C₃H₈ (propane) and calculate the respective concentrations of C₂H₆ (ethane) and C₃H₈ (propane) based on the area. The server controller 32 may display the identified gas types and the calculated gas concentrations.

Analysis based on chromatographic data may be performed by a gas chromatograph. In other words, the gas chromatograph may output the result of analysis based on the chromatographic data to the server 30, without outputting the raw chromatographic data (the chromatographic data itself) to the server 30. In this case, the server controller 32 acquires the analysis results from the gas chromatograph as the measurement data.

### <Maintenance of Gas Chromatograph>

The server controller 32 may acquire the content and time of occurrence of alarms that have occurred in the gas chromatograph as the information about the gas chromatograph. The server controller 32 may display the time of occurrence of the alarm and the content of the alarm on the management screen 50, as illustrated in FIG. 7.

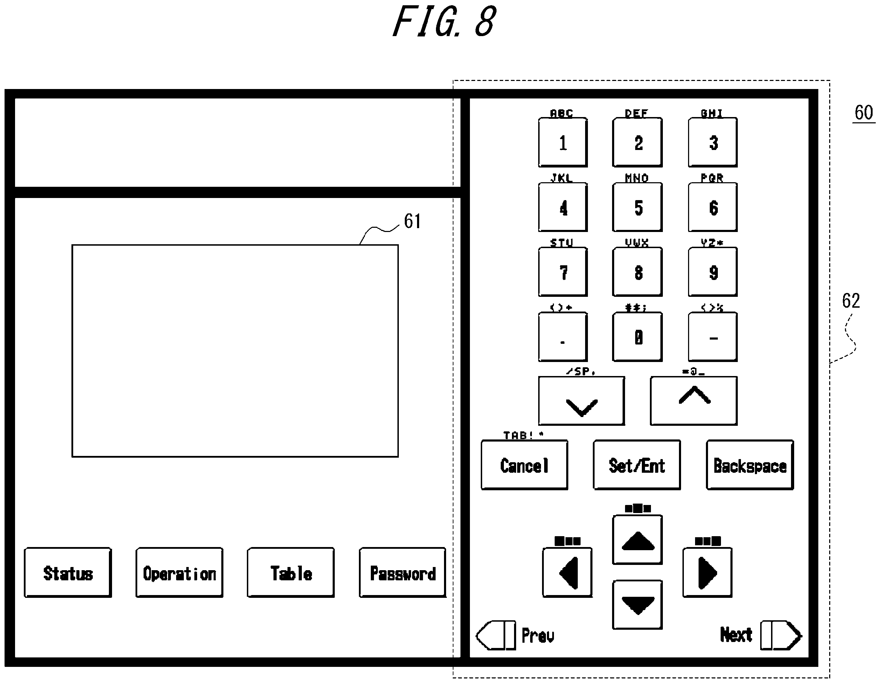

In a case in which an alarm is occurring in the gas chromatograph, the server controller 32 may display a maintenance screen 60, such as the one illustrated in FIG. 8, to enable the user to perform an operation to clear the alarm. The maintenance screen 60 includes an operation menu 61 from which the user can make selections and an operation key frame 62 for accepting user input. The server controller 32 may display the maintenance screen 60 on the touch panel and accept user operations via the touch panel. The server controller 32 may accept user operations via a pointing device such as a mouse.

In response to user operation, the server controller 32 generates information such as parameters to be set in the gas chromatograph or information on maintenance such as an update for the gas chromatograph and outputs the information to the gas chromatograph. Based on alarm information acquired from the gas chromatograph, the server controller 32 may generate instructions necessary to clear the alarm and may output the instructions to the gas chromatograph.

### <Example Flowchart of Gas Chromatograph Management Method>

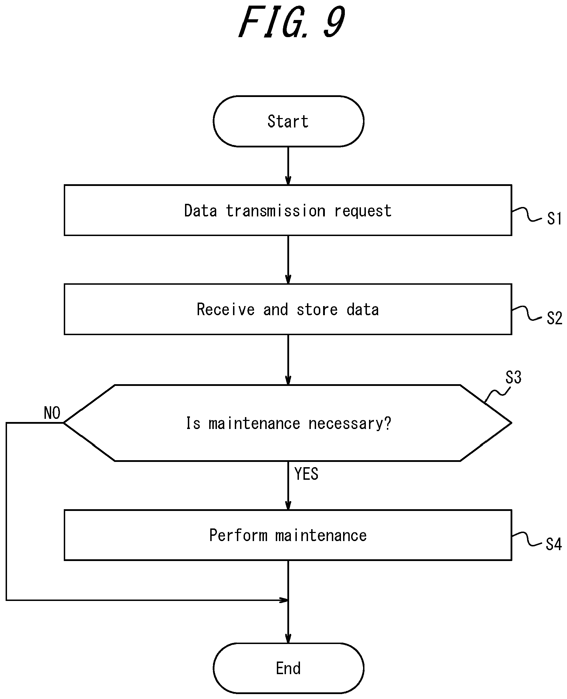

The server controller 32 of the server 30 may perform the procedures illustrated in the flowchart in FIG. 9 as a management method. The procedures illustrated in the flowchart of FIG. 9 may be implemented as a management program to be executed by the processor configuring the server controller 32. The management program may be stored on a non-transitory computer readable medium, such as an electromagnetic storage medium.

The server controller 32 requests that the gas chromatograph transmit (output) data (step S 1). The gas chromatograph transmits (outputs) data to the server 30 in response to the request. The server controller 32 receives (acquires) the data transmitted (outputted) from the gas chromatograph and stores the data on the data server 40 (step S2).

In a case of acquiring information about the gas chromatograph, the server controller 32 determines whether maintenance of the gas chromatograph is necessary based on the condition of the gas chromatograph (step S3). In a case in which maintenance of the gas chromatograph is not necessary (step S3: NO), the server controller 32 terminates execution of the procedures illustrated in FIG. 9. In a case in which maintenance of the gas chromatograph is necessary (step S3: YES), the server controller 32 performs maintenance of the gas chromatograph (step S4). Specifically, the server controller 32 may output information on the maintenance of the gas chromatograph to the gas chromatograph. The server controller 32 may notify the user of the status of the gas chromatograph, accept input from the user of instructions for maintenance, and output the information on maintenance of the gas chromatograph to the gas chromatograph. After executing the procedure of step S4, the server controller 32 terminates execution of the procedures of the flowchart in FIG. 9.

### <Summary>

As described above, according to the management system 1 in the present embodiment, gas chromatographs connected wirelessly to the same network can be managed by the server 30 (management apparatus) connected to the same network. In other words, the server 30 (management apparatus) can manage a plurality of gas chromatographs without switching the network connection. In this way, the server 30 (management apparatus) can acquire data in parallel from a plurality of gas chromatographs simultaneously or by time division. In addition, the server 30 (management apparatus) can output information in parallel to a plurality of gas chromatographs simultaneously or by time division. For example, the server 30 (management apparatus) can acquire data from other gas chromatographs and output information such as parameters to other gas chromatographs even while continuing to communicate with one gas chromatograph to perform maintenance on that gas chromatograph. The convenience for the management of a plurality of gas chromatographs installed in a plant or the like thereby improves.

Embodiments of the present disclosure have been described with reference to the drawings, but specific configurations are not limited to these embodiments, and a variety of modifications may be made without departing from the spirit and scope thereof.

In the present embodiment, a configuration in which the gas chromatographs and the management apparatus communicate via a wireless LAN has been described. The communication method is not limited to wireless LAN and may be any other wireless communication method that enables simultaneous communication with a plurality of gas chromatographs.

## Claims

1. A gas chromatograph (10) as a first gas chromatograph comprising a controller (12) configured to process data and a communication interface (14) configured to output the data to a management apparatus (30), wherein
the communication interface (14) is configured to:
function as a wireless communication access point of a network identified by a predetermined identifier and output the data and/or information about the first gas chromatograph (10) via the network to the management apparatus (30) connected to the wireless communication access point, and
connect a second gas chromatograph (20) to the wireless communication access point in bridge mode as a child device to cause the second gas chromatograph (20) to output data processed by the second gas chromatograph (20) and/or information about the second gas chromatograph (20) to the management apparatus (30) via the wireless communication access point and the network.

2. The gas chromatograph (10) according to claim 1, wherein the communication interface (14) is configured to acquire information to be set on the gas chromatograph (10) and/or information on maintenance of the gas chromatograph (10) from the management apparatus (30) via the network.

3. The gas chromatograph (10) according to claim 1 or 2, wherein the communication interface (14) is configured to cause the second gas chromatograph (20) to acquire, from the management apparatus (30), information to be set on the second gas chromatograph (20) and/or information on maintenance of the second gas chromatograph (20) via the wireless communication access point and the network.

4. A management apparatus (30) comprising:
a communication interface (36) configured to communicate with the first gas chromatograph (10) according to any one of claims 1 to 3 as a parent device and the second gas chromatograph (20) as a child device via the network; and
a controller (32) configured to acquire data received by the communication interface (36) from the first gas chromatograph (10) and the second gas chromatograph (20).

5. The management apparatus (30) according to claim 4, wherein the controller (32) is configured to generate information to be set on the first gas chromatograph (10) or the second gas chromatograph (20) or information on maintenance of the first gas chromatograph (10) or the second gas chromatograph (20) and output the generated information using the communication interface (36) via the network to the first gas chromatograph (10) or the second gas chromatograph (20).

6. A management system (1) comprising:
the gas chromatograph (10) of any one of claims 1 to 3; and
a management apparatus (30) comprising a communication interface configured to communicate with the first gas chromatograph and the second gas chromatograph via the network and a controller configured to acquire data received by the communication interface from the first gas chromatograph and the second gas chromatograph.

7. A management method comprising:
communicating via a network identified by a predetermined identifier with a first gas chromatograph (10) as a parent device that functions as a wireless communication access point of the network and a second gas chromatograph (20) as a child device that connects to the wireless communication access point in bridge mode; and
acquiring data received from the first gas chromatograph (10) and the second gas chromatograph (20) by the communicating.
